# EUROPÄISCHE PATENTANMELDUNG

(11) **EP 4 358 286 A1**
(43) Veröffentlichungstag der Anmeldung: **24.04.2024**
(21) Anmeldenummer: 22202925.8
(22) Anmeldetag: 21.10.2022
(51) Int. Cl.: H01M 50/627, B65B 39/00, B65B 39/04, B05B 1/30

(54) **FÜLLKOPF**

(71) Anmelder: Manz AG, 72768 Reutlingen (DE)
(72) Erfinder: Kaltenmark, Dirk, 72116 Mössingen (DE); Bapp, Jaro, 71272 Renningen (DE); Bäder, Christoph, 73776 Altbach (DE); Grießinger, Johannes, 72116 Mössingen (DE)
(74) Vertreter: Kohler Schmid Möbus Patentanwälte

(57) **Zusammenfassung**

Die Erfindung betrifft einen Füllkopf (10, 100, 200, 300, 506) zur Befüllung einer elektrochemischen Zelle (26, 26a, 26b) mit Elektrolyt mit einer Vorkammer (12) und einer Befüllkammer (14), sowie einem zwischen einer Offenstellung und einer Schließstellung bewegbaren Absperrorgan (18), das in der Offenstellung eine Öffnung (16) zwischen Vorkammer (12) und Befüllkammer (14) freigibt und in der Schließstellung die Öffnung (16) verschließt, wobei die Befüllkammer (16) einen Druckanschluss (22) aufweist.

## Beschreibung

Die Erfindung betrifft einen Füllkopf zur Befüllung einer elektrochemischen Zelle mit Elektrolyt mit einer Vorkammer und einer Befüllkammer, sowie einem zwischen einer Offenstellung und einer Schließstellung bewegbaren Absperrorgan, das in der Offenstellung eine Öffnung der Vorkammer freigibt und in der Schließstellung die Öffnung verschließt.

Ein solcher Füllkopf ist beispielsweise durch die US 8 047 241 B2 bekannt geworden.

Batterien, insbesondere Lithium-Ionen-Batterien, haben eine immer größere Bedeutung gewonnen. Bei der Herstellung von Batteriezellen werden Stapel von Elektrodenblättern oder aufgewickelte Elektrodenblätter in einem Batteriegehäuse angeordnet. Anschließend muss das Batteriegehäuse mit einem Elektrolyt befüllt werden. Nach der Befüllung sollte möglichst keine Luft mehr in den Elektroden sein.

Bei der in der US 8 047 241 B2 beschriebenen Vorrichtung bzw. im dort beschriebenen Verfahren zur Befüllung einer Batteriezelle mit Elektrolyt ist eine Vielzahl von Druck- und Vakuumzyklen notwendig. Außerdem muss der Elektrolyt exakt dosiert werden.

Aufgabe der vorliegenden Erfindung ist es, einen Füllkopf bereitzustellen, mit dem die Befüllung von elektrochemischen Zellen mit Elektrolyt vereinfacht und beschleunigt werden kann.

Gelöst wird diese Aufgabe erfindungsgemäß durch einen Füllkopf zur Befüllung einer elektrochemischen Zelle mit Elektrolyt mit einer Vorkammer und einer Befüllkammer, sowie einem zwischen einer Offenstellung und einer Schließstellung bewegbaren Absperrorgan, insbesondere Stößel, das in der Offenstellung eine Öffnung der Vorkammer freigibt und in der Schließstellung die Öffnung verschließt, wobei die Befüllkammer einen Druckanschluss aufweist. Während im genannten Stand der Technik die Vorkammer mehrere Druckanschlüsse aufweist, an die eine Vielzahl von Ventilen angeschlossen ist, ist erfindungsgemäß vorgesehen, einen Druckanschluss an der Befüllkammer vorzusehen. Dadurch ist eine Entkopplung zwischen kostenintensiven Dosierkomponenten und zeitintensiven Vakuum- und Druckzyklen möglich. Insbesondere kann ein einziger Druckanschluss für einen hohen Druck (Überdruck) und einen geringeren, im Vergleich dazu niedrigen Druck (Vakuum) vorgesehen sein. Die Vorkammer kann vorab befüllt werden und der Füllkopf anschließend zu einer Prozessstation bewegt werden, wo die Druck- und Vakuumzyklen und das Befüllen der Zelle durchgeführt werden.

Bei der elektrochemischen Zelle (die eigentlich erst nach der Befüllung mit Elektrolyt eine elektrochemische Zelle ist) kann es sich um eine Batteriezelle oder einen Kondensator oder dgl. handeln.

An den Druckanschluss können ein oder mehrere Ventile angeschlossen werden. Außerdem kann der Druckanschluss mit einer Vakuumquelle und/oder einer Druckquelle verbunden werden.

Die Befüllkammer kann einen Anschluss zur Befüllung mit Elektrolyt aufweisen. Die Befüllung der Befüllkammer mit Elektrolyt kann dezentral erfolgen, insbesondere außerhalb einer Prozessstation, in der die elektrochemische Zelle mit Elektrolyt befüllt wird. Zur Entlüftung der Befüllkammer kann eine Entlüftungsöffnung vorgesehen sein.

Die Öffnung, die insbesondere an der Unterseite der Vorkammer angeordnet sein kann, kann unmittelbar in die Befüllkammer münden. Alternativ kann an der Öffnung ein Rohr angeschlossen sein, das in die Befüllkammer ragt. Weiterhin ist denkbar, dass ein an die Öffnung angeschlossenes Rohr in die zu befüllende elektrochemische Zelle ragt und Elektrolyt bei geöffnetem Absperrorgan zunächst in die elektrochemische Zelle gelangt und dann, wenn die elektrochemische Zelle quasi überläuft, in die Befüllkammer gelangt. Es können mehrere Rohre vorgesehen ein. Insbesondere können mehrere Öffnungen mit jeweils daran angeschlossenem Rohr vorgesehen sein.

Besondere Vorteile ergeben sich, wenn das Absperrorgan gegen eine Rückstellkraft aus der Schließstellung in die Offenstellung bewegbar ist. Aufgrund der Rückstellkraft wird der Absperrorgan stets automatisch in seine Schließstellung bewegt. Das Absperrorgan muss demnach nicht durch einen Antrieb beaufschlagt werden, wenn der Füllkopf mit Elektrolyt befüllter Vorkammer bewegt wird, da das Absperrorgan automatisch in der Schließstellung ist.

Es können mehrere Öffnungen vorgesehen sein, die durch das Absperrorgan verschließbar sind. Insbesondere kann der Füllkopf auf die jeweilige elektrochemische Zelle, die befüllt werden soll, angepasst sein. Beispielsweise können runde oder prismatische elektrochemische Zellen, die eine Füllöffnung aufweisen, mit einem Füllkopf befüllt werden, der lediglich eine Öffnung zwischen Vorkammer und Befüllkammer aufweist und der einen Anschlussstutzen zur Verbindung mit der elektrochemische Zelle aufweist. Soll dagegen eine Rundzelle mit einem offenen Deckel befüllt werden, kann es vorteilhaft sein, mehrere Öffnungen zwischen Vorkammer und Befüllkammer vorzusehen. Dadurch kann eine bessere Verteilung des Elektrolyts erreicht werden. Das Zentrum kann frei von Elektrolyt gehalten werden. Es kann vermieden werden, dass Elektrolyt auf Störkonturen strömt und dadurch Spritzer entstehen. Außerdem kann durch diese Maßnahme ein gleichmäßigeres Einströmen erreicht werden.

In einer weiteren Ausgestaltung kann die Öffnung der Vorkammer zur Befüllkammer mit mindestens einem Rohr versehen sein, das in die Befüllkammer hineinragt. Dadurch kann der Elektrolyt ruhiger in die Befüllkammer einfließen. Das Rohr kann zudem als Düse oder Diffusor ausgeführt werden, um das Strömungsverhalten anzupassen.

In den Rahmen der Erfindung fällt außerdem eine Prozessvorrichtung mit einem Werkstückträger zur Aufnahme zumindest einer mit Elektrolyt zu befüllenden elektrochemischen Zelle und einem Deckel, der auf den Werkstückträger aufsetzbar ist, wobei an dem Deckel zumindest ein erfindungsgemäßer Füllkopf angeordnet ist. Vorzugsweise sind an dem Deckel mehrere Füllköpfe angeordnet. Beispielsweise können vier Füllköpfe an dem Deckel angeordnet sein. Der Deckel weist dabei Durchgangsöffnungen auf, sodass eine fluidische Verbindung zwischen dem Füllkopf und einer unter dem Deckel angeordneten elektrochemischen Zelle hergestellt werden kann.

Somit können zu befüllende elektrochemische Zellen in den Werkstückträger eingesetzt werden. Anschließend kann der Deckel auf den Werkstückträger aufgesetzt werden und dabei eine fluidische Verbindung zwischen den am Deckel angeordneten Füllköpfen und den elektrochemische Zellen hergestellt werden. Die Füllköpfe des Deckels können vor dem Aufsetzen des Deckels auf den Werkstückträger bereits mit Elektrolyt befüllt werden.

Die Verbindung zwischen dem Deckel und dem Werkstückträger kann fluiddicht ausgeführt werden. Dies kann dazu genutzt werden, um innerhalb und außerhalb der elektrochemische Zelle ein unterschiedliches Druckniveau zu ermöglichen. Auch ermöglicht diese Abdichtung beispielsweise bei einer nicht fluiddichten Abdichtung zwischen Befüllkammer und elektrochemischer Zelle die Erzeugung eines Vakuums in der elektrochemischen Zelle.

An dem Deckel und/oder dem Werkstückträger kann zumindest ein Prozessanschluss vorgesehen sein, der mit dem Druckanschluss der Befüllkammer des zumindest einen Füllkopfs verbunden ist. Somit kann der Prozessanschluss des Deckels und/oder des Werkstückträgers an einer Prozessstation mit einer Druckquelle und/oder Vakuumquelle verbunden werden.

In einer weiteren Ausgestaltung kann am Werkstückträger anstatt oder zusätzlich zum Prozessanschluss am Deckel mindestens ein weiterer Prozessanschluss vorgesehen sein. Dieser kann dazu dienen, verschiedene Drücke innerhalb und außerhalb der elektrochemische Zelle zu erzeugen. Es könnte der Prozessanschluss für den Deckel auch erst durch den Werkstückträger durchgeführt werden, sodass der Prozessanschluss im Deckel nicht zur Außenseite hin offen ist.

Durch einen Prozessanschluss am Werkstückträger kann der Innenraum der Prozessvorrichtung, insbesondere der Raum zwischen elektrochemischer Zelle und Werkstückträger, evakuiert oder mit Überdruck beaufschlagt werden.

Weitere Vorteile ergeben sich, wenn der Werkstückträger eine federnd gelagerte Aufnahme zur Aufnahme der zumindest einen elektrochemischen Zelle aufweist. Dabei kann für jede elektrochemische Zelle eine federnd gelagerte Aufnahme vorgesehen sein. Dadurch können Toleranzen und Verschleiß ausgeglichen werden.

In den Rahmen der Erfindung fällt weiterhin eine Elektrolyt-Befüllanordnung mit zumindest einer Befüllstation zur Befüllung der Vorkammern von an einem Deckel einer Prozessvorrichtung angeordneten Füllköpfen, mehreren Prozessstationen, wobei jede Prozessstation zumindest einen Anschluss zur Verbindung mit einem Prozessanschluss einer Prozessvorrichtung aufweist. Somit ist es möglich, Prozessvorrichtungen zu Prozessstationen zu transportieren, wo die Prozessvorrichtung mit ihrem Prozessanschluss angeschlossen werden kann, sodass in der Befüllkammer ein Überdruck oder ein Vakuum erzeugt werden kann. Die Befüllung der Vorkammern mit Elektrolyt erfolgt in der Befüllstation, also entkoppelt von den Prozessstationen. Durch diese Trennung der Stationen kann der Durchsatz der Elektrolyt-Befüllanordnung erhöht werden. Es ergibt sich ein flexibles Anlagendesign. Auf große Vakuumkammern kann verzichtet werden. Die Anzahl von Dosiersystemen kann im Vergleich zum Stand der Technik reduziert werden.

Die Elektrolyt-Befüllanordnung kann eine Deckelreinigungsstation aufweisen. Somit kann vor dem erneuten Befüllen der Füllkopfe mit Elektrolyt eine Reinigung durchgeführt werden und nicht gebrauchter Elektrolyt entfernt werden.

Um eine Qualitätskontrolle zu ermöglichen, kann beladeseitig und/oder entladeseitig eine Wiegestation vorgesehen sein. Insbesondere können die elektrochemischen Zellen vor der Befüllung mit Elektrolyt und nach der Befüllung mit Elektrolyt gewogen werden. Dadurch kann sichergestellt werden, dass die elektrochemischen Zellen vollständig mit Elektrolyt befüllt wurden.

Es kann eine Transportvorrichtung zum Transport von Prozessvorrichtungen und eine Transportvorrichtung zum Transport von Deckeln von Prozessvorrichtungen vorgesehen sein. Über die Transportvorrichtung können Prozessvorrichtungen von einer Beladeseite zu einer Entladeseite der Elektrolyt-Befüllanordnung transportiert werden. Insbesondere können die Prozessvorrichtungen durch die Transportvorrichtung zu Prozessstationen transportiert werden und dann wieder von den Prozessstationen zur Entladeseite. Nach dem Entladen können die Deckel zur Beladeseite zurücktransportiert werden. Dabei können die Prozessdeckel bzw. die daran angeordneten Füllköpfe zunächst gereinigt und anschließend befüllt werden, ehe sie zur Beladeseite gelangen. Der Rücktransport von Deckel und Werkstückträger kann getrennt oder gemeinsam erfolgen.

Weiterhin fällt in den Rahmen der Erfindung ein Verfahren zum Befüllen einer elektrochemischen Zelle mit einem Elektrolyt mit einem erfindungsgemäßen Füllkopf mit den Verfahrensschritten:
a) Befüllen der Vorkammer des Füllkopfs mit einem Elektrolyt, wobei das Absperrorgan in einer Schließstellung ist,
b) Aufsetzen des Füllkopfs auf eine zu befüllende elektrochemische Zelle,
c) Evakuieren der Befüllkammer und der elektrochemischen Zelle,
d) Verlagern des Absperrorgans in die Öffnungsstellung, sodass Elektrolyt von der Vorkammer in die Befüllkammer und die elektrochemische Zelle fließt,
e) Verlagern des Absperrorgans in die Schließstellung.

Dadurch, dass die Vorkammer bei geschlossenem Absperrorgan befüllt wird, kann das Befüllen der Vorkammer erfolgen, ehe der Füllkopf auf die zu befüllende elektrochemische Zelle aufgesetzt wird. Beim Öffnen des Absperrorgans fließt aufgrund der vorherigen Evakuierung der elektrochemischen Zelle und der Befüllkammer Elektrolyt in die elektrochemische Zelle, gegebenenfalls zuerst in die elektrochemische Zelle und dann in die Befüllkammer. Der Elektrolyt wird quasi in die elektrochemische Zelle gezogen. Idealerweise ist keine weitere Druckbeaufschlagung notwendig, um die elektrochemische Zelle vollständig mit Elektrolyt zu füllen. Nach dem erneuten Schließen des Absperrorgans kann übriger Elektrolyt in der Vorkammer verbleiben. Die Befüllung der Vorkammer ergibt die Dosiergenauigkeit und somit kann in beliebig vielen Schritten das Absperrorgan geöffnet und geschlossen werden ohne die absolute Dosiergenauigkeit zu beeinflussen.

Vorteile ergeben sich jedoch, wenn nach dem Schließen des Absperrorgans ein Druck größer 1 bar an den Druckanschluss angelegt wird. Dadurch kann Elektrolyt in die elektrochemische Zelle gedrückt werden. Dies ermöglicht eine beschleunigte Aufnahme des Elektrolyts in die elektrochemische Zelle.

Gegebenenfalls kann anschließend erneut das Absperrorgan geöffnet werden, sodass Elektrolyt in die Befüllkammer nachfließen kann. Anschließend kann erneut ein Druck angelegt werden, um noch mehr Elektrolyt in die elektrochemische Zelle zu pressen. Vorher oder nachher kann es gegebenenfalls noch weitere Evakuierungsschritte oder Entlüftungsschritte geben. Zwischenzeitliches Evakuieren kann ggf. genutzt werden, um entstehende Gase herauszuziehen. Insbesondere können mehrere Druckzyklen (Evakuieren und/oder Überdruck), auch mit kurzen Öffnungszeiten des Absperrorgans, durchgeführt werden.

Beispielsweise kann zunächst die elektrochemische Zelle evakuiert werden, indem ein Absolutdruck von weniger als 500 mbar, insbesondere 5 mbar, angelegt wird. Vor dem Öffnen des Absperrorgans kann auf einen Absolutdruck oberhalb des Dampfdruckes des Elektrolyts gespült werden. Dann kann das Absperrorgan kurz geöffnet werden. Wenn das Absperrorgan geschlossen ist, kann erneut ein Druck kleiner 500mbar angelegt werden. Dann kann das Absperrorgan erneut geöffnet werden. Nach dessen Schließung kann wieder bei einem Druck kleiner 500 mbar evakuiert werden und dann erneut das Absperrorgan geöffnet werden. Wenn es geschlossen ist, kann ein Absolutdruck von mehr als 1 bar, z. B. 6 bar, angelegt werden. Anschließend kann ein Absolutdruck von unter 500mbar angelegt werden, dann erneut ein hoher Druck von z. B. 6 bar. Dann kann erneut ein Druck von unter 500mbar angelegt werden und danach das Absperrorgan geöffnet werden, um Elektrolyt nachzufüllen. Es können weitere Schritte mit hohem und niedrigem angelegten Druck folgen und nach einer Folge von Evakuierungs- und Überdruckschritten kann das Absperrorgan erneut geöffnet werden. Jeder Schritt, in dem das Absperrorgan geöffnet wird, entspricht einem Einzeldosierschritt. Die Summe der Einzeldosierschritte entspricht der Elektrolytmenge in der Vorkammer.

Weitere Merkmale und Vorteile der Erfindung ergeben sich aus der nachfolgenden detaillierten Beschreibung von Ausführungsbeispielen der Erfindung anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

Es zeigen:
- Fig. 1: eine stark schematisierte Darstellung eines Füllkopfs, der mit einer elektrochemischen Zelle verbunden ist;
- Fig. 2: eine weitere schematische Darstellung eines Füllkopfs;
- Fig. 3: eine Ausgestaltung eines Füllkopfs zur Befüllung von Rundzellen mit offenem Deckel;
- Fig. 4: eine Darstellung eines Füllkopfs zur Befüllung von Zellen mit einer Befüllöffnung;
- Fig. 5: eine Explosionsdarstellung einer Prozessvorrichtung;
- Fig. 6a: eine alternative Ausgestaltung einer Prozessvorrichtung;
- Fig. 6b: einen Teil der Prozessvorrichtung der Fig. 6a;
- Fig. 7: eine schematische Darstellung einer Elektrolyt-Befüllanordnung.

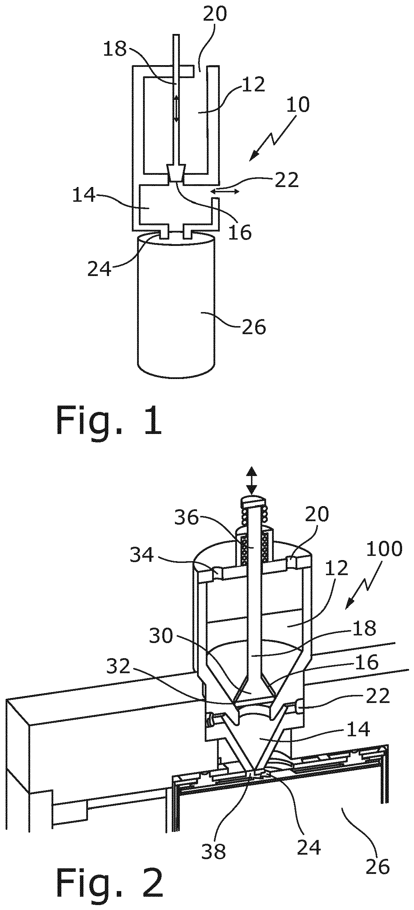

Die Fig. 1 zeigt eine stark schematisierte Darstellung eines Füllkopfs 10, der eine Vorkammer 12 und eine Befüllkammer 14 aufweist. Zwischen der Vorkammer 12 und der Befüllkammer 14 ist eine Öffnung 16 vorgesehen, die durch ein als Stößel ausgebildetes Absperrorgan 18 verschließbar ist.

Elektrolyt kann durch die Einfüllöffnung 20 in die Vorkammer 12 eingefüllt werden, insbesondere, wenn sich das Absperrorgan 18 in einer Schließstellung befindet und die Öffnung 16 verschließt. Die Befüllkammer 14 weist einen Druckanschluss 22 auf, der mit einer Druckquelle oder Vakuumquelle verbindbar ist. Insbesondere kann über den Druckanschluss 22 ein Absolutdruck im Bereich 0,1 mbar bis 100 bar, vorzugsweise im Bereich 1 mbar bis 10 bar, an die Befüllkammer 14 angelegt werden.

Der Füllkopf 10 weist weiterhin einen Anschlussstutzen 24 zur Verbindung mit einer zu befüllenden elektrochemische Zelle 26 auf.

Zur Befüllung der elektrochemische Zelle 26 kann zunächst, ohne dass der Füllkopf 10 mit der lektrochemische Zelle 26 verbunden ist, bei geschlossenem Absperrorgan 18 Elektrolyt durch die Einfüllöffnung 20 in die Vorkammer 12 eingefüllt werden. Anschließend kann der Füllkopf 10, gegebenenfalls fluiddicht, auf die elektrochemische Zelle 26 aufgesetzt werden.

Über den Druckanschluss 22 können sowohl die elektrochemische Zelle 26 als auch die Befüllkammer 14 evakuiert werden, wobei das Absperrorgan 18 dabei in der Schließstellung ist. Anschließend, insbesondere nachdem ein an den Druckanschluss 22 angeschlossenes Ventil geschlossen wurde, kann das Absperrorgan 18 in eine Offenstellung verlagert werden, sodass Elektrolyt aus der Vorkammer 12 in die Befüllkammer 14 und in die elektrochemische Zelle 26 fließen kann. Aufgrund des Drucks, insbesondere eines geringeren Drucks in der Befüllkammer 14 als in der Vorkammer 12, wird Elektrolyt quasi in die elektrochemische Zelle 26 gezogen. Anschließend kann das Absperrorgan 18 wieder in seine Schließstellung verlagert werden. Über den Druckanschluss 22 kann ein Druck größer 1 bar, insbesondere im Bereich 1 - 10 bar, angelegt werden, um zusätzlichen in der Befüllkammer 14 befindlichen Elektrolyt in die elektrochemische Zelle 26 zu pressen. Weitere Zyklen mit Vakuum/Überdruck können durchgeführt werden. Anschließend kann der Füllkopf 10 von der elektrochemische Zelle 26 getrennt werden.

Die Fig. 2 zeigt eine weitere Ausgestaltung eines Füllkopfs 100. Elemente, die denen der Fig. 1 entsprechen, tragen dieselbe Bezugsziffer. Hier ist zu erkennen, dass sich die Befüllkammer 14 nach unten konisch verjüngt. Die Öffnung 16 ist ebenfalls konisch ausgestaltet, verjüngt sich jedoch nach oben. Das freie Ende 30 des Absperrorgans 18 ist komplementär zur Öffnung 16 ausgestaltet, um eine gute Abdichtung realisieren zu können. Insbesondere weist das Absperrorgan 18 an seinem freien Ende 30 eine sich erweiternde Kontur auf. Zwischen dem Absperrorgan 18 und der Öffnung 16 ist eine Dichtkante 32 ausgebildet.

Um das Befüllen der Vorkammer 12 zu erleichtern, kann eine Entlüftungsöffnung 34 vorgesehen sein.

Das Absperrorgan 18 ist aus der gezeigten Schließstellung gegen die Rückstellkraft eines Federelements 36 in die Öffnungsstellung bewegbar. Das Federelement 36 bewirkt, dass ohne externe Kraftbeaufschlagung das Absperrorgan 18 stets in einer Schließstellung ist. Dies erlaubt es, die Vorkammer 12 in einer Befüllstation zu befüllen, ohne das Absperrorgan 18 betätigen zu müssen und im befüllten Zustand durch eine Befüllanordnung zu transportieren.

Am Anschlussstutzen 24 ist eine Dichtkante 38 zur Abdichtung gegenüber der elektrochemische Zelle 26 ausgebildet.

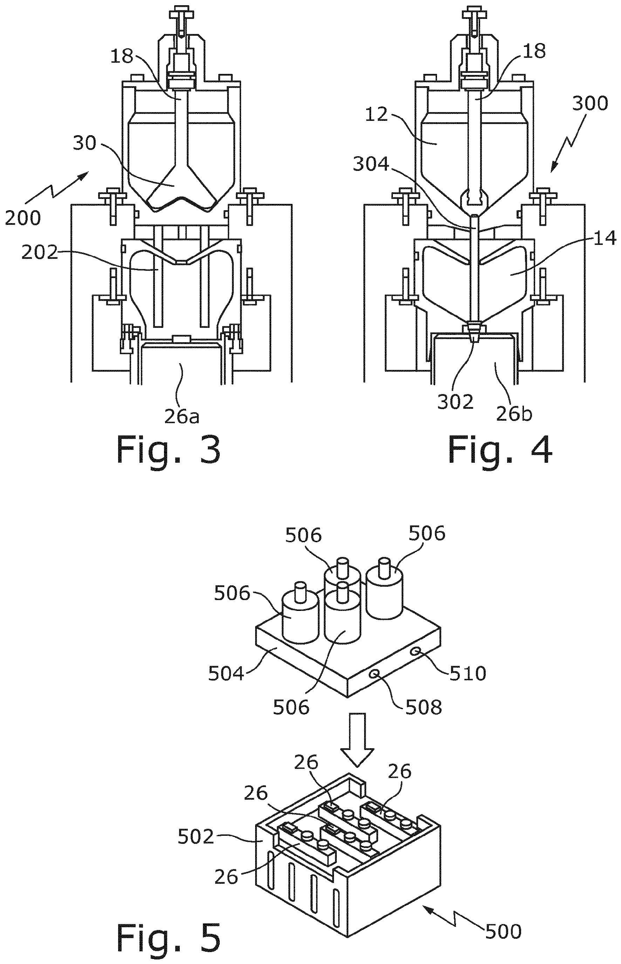

Die Fig. 3 zeigt eine weitere alternative Ausgestaltung eines Füllkopfs 200, der zur Befüllung einer elektrochemische Zelle 26a, die als Rundzelle mit offenem Deckel ausgestaltet ist, geeignet ist. Das freie Ende 30 des Absperrorgans 18 ist so ausgebildet, dass mehrere Öffnungen 16 gleichzeitig geschlossen bzw. freigegeben werden können. Die Öffnung der Vorkammer 12 zur Befüllkammer 14 ist mit Rohren 202 versehen, die in die Befüllkammer 14 hineinragen. Dadurch kann der Elektrolyt ruhiger in die Befüllkammer 14 einfließen. Die Rohre 202 können zudem als Düse oder Diffusor ausgeführt werden, um das Strömungsverhalten anzupassen.

Bei der Ausgestaltung eines Füllkopfs 300 gemäß der Fig. 4, der zur Befüllung einer eine Füllöffnung 302 aufweisenden elektrochemischen Zelle 26b ausgebildet ist, ist als Besonderheit zu erkennen, dass ein Rohr 304 von der Öffnung der Vorkammer 12 in die Füllöffnung 302 der elektrochemische Zelle 26b ragt. Wenn das Absperrorgan 18 geöffnet wird, fließt Elektrolyt zunächst in die elektrochemische Zelle 26b und dann durch einen Ringspalt in die Befüllkammer 14. Der Ringspalt entsteht, da der Außendurchmesser des Rohrs 304 geringer ist als der Innendurchmesser der Füllöffnung 302.

Die Fig. 5 zeigt eine Prozessvorrichtung 500 mit einem Werkstückträger 502, der ausgebildet ist, elektrochemische Zellen 26 aufzunehmen. Dabei kann für jede elektrochemische Zelle 26 eine federnd gelagerte Aufnahme oder Halterung vorgesehen sein. Durch die federnd gelagerte Aufnahme oder Halterung kann bewirkt werden, dass die elektrochemischen Zellen 26 von unten gegen einen Deckel 504 gedrückt werden, der auf den Werkstückträger 502 aufgesetzt ist. An dem Deckel 504 sind mehrere, im gezeigten Ausführungsbeispiel vier, Füllköpfe 506 angeordnet, wobei jeder Füllkopf 506 wie einer der zuvor beschriebenen Füllköpfe 10, 100, 200, 300 ausgebildet sein kann. An dem Deckel 504 sind Prozessanschlüsse 508, 510 vorgesehen, die mit den Druckanschlüssen 22 der Füllköpfe 506 verbunden sind, wobei jeder Füllkopf 506 mit nur einem Prozessanschluss 508, 510 verbunden ist. Aufgrund der versetzten Anordnung der Füllköpfe 506 sind zwei Druckanschlüsse 508, 510 vorgesehen, wobei jeder der Prozessanschlüsse 508, 510 mit zwei Füllköpfen 506 verbunden ist.

Es kann auch einer der Prozessanschlüsse 508, 510 dafür vorgesehen sein, den (Zwischen-)Raum zwischen den elektrochemischen Zellen 26 und dem Werkstückträger 502 zu evakuieren und/oder mit Druck zu beaufschlagen. In diesem Fall wäre einer der Prozessanschlüsse 508, 510 mit allen Füllköpfen 506 verbunden. Eine Druckbeaufschlagung des Zwischenraums kann dazu beitragen, eine Verformung der elektrochemischen Zellen zu verhindern, wenn deren Innenraum mit Über- oder Unterdruck beaufschlagt wird.

Zur Druckbeaufschlagung (Über- oder Unterdruck) des Zwischenraums kann auch ein zusätzlicher nicht gezeigter Prozessanschluss vorgesehen sein. Weiterhin kann ein Prozessanschluss am Werkstückträger 502 vorgesehen sein, der mit einem Druckanschluss zumindest eines Füllkopfs 506 verbunden ist.

Insbesondere sind an dem Deckel 504 genauso viele Füllköpfe 506 angeordnet, wie Aufnahmen für elektrochemische Zellen 26 im Werkstückträger 502 vorgesehen sind. Durch das Aufsetzen des Deckels 504 auf den Werkstückträger 502 können die Füllköpfe 506 je nach Ausgestaltung der Füllköpfe 506 und elektrochemischen Zellen 26 fluiddicht mit den elektrochemische Zellen 26 verbunden werden, sodass eine Befüllung mit Elektrolyt nach einer vorherigen Evakuierung der elektrochemischen Zellen 26 durchgeführt werden kann.

An dem Werkstückträger 502 oder dem Deckel 504 kann eine Dichtung vorgesehen sein, sodass Werkstückträger 502 und Deckel 504 fluiddicht miteinander verbunden werden können.

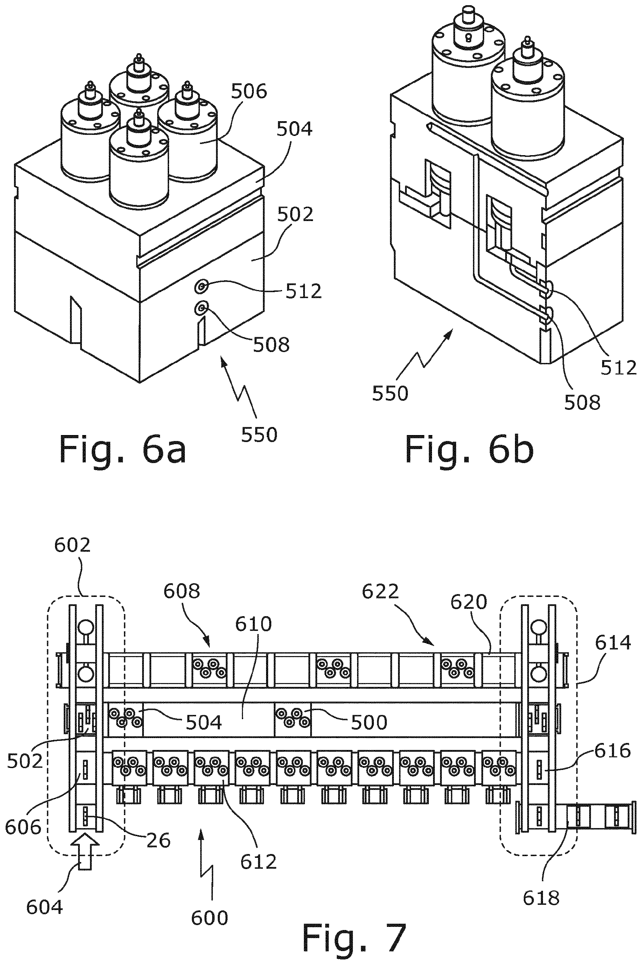

Die Fig. 6a zeigt eine alternative Ausgestaltung einer Prozessvorrichtung 550. Der Deckel 504 weist wiederum vier Füllköpfe 506 auf, die jedoch nicht versetzt angeordnet sind. Ein Prozessanschluss 508 ist am Werkstückträger 502 angeordnet und mit den Druckanschlüssen der Füllköpfe 506 verbunden. Insbesondere führt eine fluidische Verbindung vom Prozessanschluss 508 durch den Werkstückträger 502 und den Deckel 504 zu den Druckanschlüssen der Füllköpfe 506. Dies ist in der Fig. 6b, die einen Teil der Prozessvorrichtung 550 zeigt, zu erkennen.

Weiterhin ist am Werkstückträger 502 ein Prozessanschluss 512 vorgesehen, der zu dem (Zwischen-)Raum zwischen den elektrochemischen Zellen und dem Werkstückträger 502 führt. Über den Prozessanschluss 512 kann somit der Zwischenraum evakuiert oder mit Druck beaufschlagt werden.

Zwischen dem Werkstückträger 502 und dem Deckel 504 ist eine Dichtung angeordnet, um diese fluiddicht abzudichten.

Die Fig. 7 zeigt eine Elektrolyt-Befüllanordnung 600. In einem Beladebereich 602 können in Pfeilrichtung 604 elektrochemische Zellen 26 zugeführt werden. In einer Wiegestation 606 wird die elektrochemische Zelle 26 gewogen, ehe sie in einen Werkstückträger 502 eingesetzt wird. Wenn der Werkstückträger 502 mit elektrochemische Zellen 26 befüllt ist, wird ein Deckel 504 auf den Werkstückträger 502 aufgesetzt. Die Füllköpfe 506 des Deckels 502 wurden in einer Befüllstation 608 zuvor befüllt.

Über eine Transporteinrichtung 610 wird die Prozessvorrichtung 500, die den Werkstückträger 502 und den Deckel 504 aufweist, einer von mehreren Prozessstationen 612 zugeführt, wo ein Anschluss zu den Prozessanschlüssen 508, 510 hergestellt wird. In der Prozessstation 612 können dann die elektrochemische Zellen 26 mit Elektrolyt befüllt werden. Nach dem Befüllen gelangen die Prozessvorrichtungen 500 zu einem Entladebereich 614, wo der Deckel 504 abgenommen wird und die elektrochemische Zellen 26 aus dem Werkstückträger 502, beispielsweise mittels eines Greifers, entnommen werden. Die einzelnen elektrochemischen Zellen 26 werden in einer Wiegestation 616 erneut gewogen. An einer Verschlussstation 618 können die elektrochemischen Zellen 26 verschlossen werden. Die Deckel 504 gelangen über eine Transportvorrichtung 620 von dem Entladebereich 614 zu einer Reinigungsstation 622, wo die Füllköpfe 506 gereinigt werden, insbesondere durchgespült werden. Auf dem Rückweg von dem Entladebereich 614 zum Beladebereich 602 werden die Füllköpfe 506 in der Befüllstation 608 befüllt. Das Befüllen der Füllköpfe 506 mit Elektrolyt erfolgt demnach an einer anderen Stelle als das Befüllen der elektrochemischen Zellen 26 mit Elektrolyt.

## Patentansprüche

1. Füllkopf (10, 100, 200, 300, 506) zur Befüllung einer elektrochemischen Zelle (26, 26a, 26b) mit Elektrolyt mit einer Vorkammer (12) und einer Befüllkammer (14), sowie einem zwischen einer Offenstellung und einer Schließstellung bewegbaren Absperrorgan (18), das in der Offenstellung eine Öffnung (16) der Vorkammer (12) freigibt und in der Schließstellung die Öffnung (16) verschließt, **dadurch gekennzeichnet, dass** die Befüllkammer (16) einen Druckanschluss (22) aufweist.

2. Füllkopf nach Anspruch 1, **dadurch gekennzeichnet, dass** das Absperrorgan (18) gegen eine Rückstellkraft aus der Schließstellung in die Offenstellung bewegbar ist.

3. Füllkopf nach einem der vorhergehenden Ansprüche, **dadurch gekennzeichnet, dass** mehrere Öffnungen (16) vorgesehen sind, die durch das Absperrorgan (18) verschließbar sind.

4. Füllkopf nach einem der vorhergehenden Ansprüche, **dadurch gekennzeichnet, dass** ein Rohr (202, 304) von der Vorkammer (12) in die Befüllkammer (14) und/oder eine zu befüllende elektrochemische Zelle (26, 26b) ragt.

5. Prozessvorrichtung (500, 550) mit einem Werkstückträger (502) zur Aufnahme zumindest einer mit Elektrolyt zu befüllenden elektrochemischen Zelle (26, 26a, 26b) und einem Deckel (504), der auf den Werkstückträger (502) aufsetzbar ist, wobei an dem Deckel (504) zumindest ein Füllkopf (10, 100, 200, 300, 506) nach einem der vorhergehenden Ansprüche angeordnet ist.

6. Prozessvorrichtung nach Anspruch 5, **dadurch gekennzeichnet, dass** der Werkstückträger (502) und der Deckel (504) fluiddicht miteinander verbunden oder verbindbar sind.

7. Prozessvorrichtung nach Anspruch 5 oder 6, **dadurch gekennzeichnet, dass** an dem Deckel (504) und/oder dem Werkstückträger (502) zumindest ein Prozessanschluss (508, 510) vorgesehen ist, der mit dem Druckanschluss (22) der Befüllkammer (14) des zumindest einen Füllkopfs (10, 100, 200, 300, 506) verbunden ist.

8. Prozessvorrichtung nach einem der Ansprüche 5 bis 7, **dadurch gekennzeichnet, dass** an dem Werkstückträger (502) ein Prozessanschluss (512) zur Evakuierung des Innenraums der Prozessvorrichtung (500) vorgesehen ist.

9. Prozessvorrichtung nach einem der Ansprüche 5 bis 8, **dadurch gekennzeichnet, dass** der Werkstückträger (502) eine federnd gelagerte Aufnahme zur Aufnahme der zumindest einen elektrochemischen Zelle (26, 26a, 26b) aufweist.

10. Elektrolyt-Befüllanordnung (600) mit zumindest einer Befüllstation (608) zur Befüllung der Vorkammern (12) von an einem Deckel (504) einer Prozessvorrichtung (500, 550), insbesondere nach einem der Ansprüche 5 bis 9, angeordneten Füllköpfen (10, 100, 200, 300, 506), mehreren Prozessstationen (612), wobei jede Prozessstation (612) zumindest einen Anschluss zur Verbindung mit einem Prozessanschluss (508, 510, 512) einer Prozessvorrichtung (500, 550) aufweist.

11. Elektrolyt-Befüllanordnung nach Anspruch 10, **dadurch gekennzeichnet, dass** beladeseitig und/oder entladeseitig eine Wiegestation (606, 616) vorgesehen ist.

12. Elektrolyt-Befüllanordnung nach Anspruch 10 oder 11, **dadurch gekennzeichnet, dass** eine Transportvorrichtung (610) zum Transport von Prozessvorrichtungen (500, 550) und eine Transportvorrichtung (620) zum Transport von Deckeln (504) von Prozessvorrichtungen (500, 550) vorgesehen sind.

13. Verfahren zum Befüllen einer Elektrochemische Zelle (26, 26a, 26b) mit einem Elektrolyt mit einem Füllkopf (10, 100, 200, 300, 506) nach einem der Ansprüche 1 bis 3, mit den Verfahrensschritten:
a. Befüllen der Vorkammer (12) des Füllkopfs (10, 100, 200, 300, 506) mit einem Elektrolyten, wobei das Absperrorgan (18) in einer Schließstellung ist,
b. Aufsetzen des Füllkopfs (10, 100, 200, 300, 506) auf eine zu befüllende elektrochemische Zelle (26, 26a, 26b),
c. Evakuieren der Befüllkammer (14) und der elektrochemischen Zelle (26, 26a, 26b),
d. Verlagern des Absperrorgans (18) in die Öffnungsstellung, sodass Elektrolyt von der Vorkammer (12) in die Befüllkammer (14) und die elektrochemische Zelle (26, 26a, 26b) fließt,
e. Verlagern des Absperrorgans (18) in die Schließstellung.

14. Verfahren nach Anspruch 13, **dadurch gekennzeichnet, dass** nach dem Schließen des Absperrorgans (18) ein Druck größer 1 bar an den Druckanschluss (22) angelegt wird.

15. Verfahren nach Anspruch 13 oder 14, **dadurch gekennzeichnet, dass** das Absperrorgan (18) erneut in eine Öffnungsstellung verbracht wird.

16. Verfahren nach einem der Ansprüche 13 bis 15, **dadurch gekennzeichnet, dass** mehrere Druckzyklen, optional bei geöffnetem Absperrorgan (18), durchgeführt werden.

17. Verfahren nach einem der Ansprüche 13 bis 16, **dadurch gekennzeichnet, dass** die Vorkammer (12) des Füllkopfs (10, 100, 200, 300, 506) in einer Befüllstation (608) einer Elektrolyt-Befüllanordnung (600) mit Elektrolyt befüllt wird und die elektrochemische Zelle (26, 26a, 26b) in einer Prozessstation (612) der Elektrolyt-Befüllstation (600) mit Elektrolyt aus dem Füllkopf (10, 100, 200, 300, 506) befüllt wird.

## Geänderte Patentansprüche

### Geänderte Patentansprüche gemäss Regel 137(2) EPÜ.

1. Füllkopf (10, 100, 200, 300, 506) zur Befüllung einer elektrochemischen Zelle (26, 26a, 26b) mit Elektrolyt mit einer Vorkammer (12) und einer Befüllkammer (14), sowie einem zwischen einer Offenstellung und einer Schließstellung bewegbaren Absperrorgan (18), das in der Offenstellung eine Öffnung (16) der Vorkammer (12) freigibt und in der Schließstellung die Öffnung (16) verschließt, wobei die Befüllkammer (16) einen Druckanschluss (22) aufweist, **dadurch gekennzeichnet, dass** das Absperrorgan (18) gegen eine Rückstellkraft aus der Schließstellung in die Offenstellung bewegbar ist.

2. Füllkopf nach Anspruch 1, **dadurch gekennzeichnet, dass** mehrere Öffnungen (16) vorgesehen sind, die durch das Absperrorgan (18) verschließbar sind.

3. Füllkopf nach einem der vorhergehenden Ansprüche, **dadurch gekennzeichnet, dass** ein Rohr (202, 304) von der Vorkammer (12) in die Befüllkammer (14) und/oder eine zu befüllende elektrochemische Zelle (26, 26b) ragt.

4. Prozessvorrichtung (500, 550) mit einem Werkstückträger (502) zur Aufnahme zumindest einer mit Elektrolyt zu befüllenden elektrochemischen Zelle (26, 26a, 26b) und einem Deckel (504), der auf den Werkstückträger (502) aufsetzbar ist, wobei an dem Deckel (504) zumindest ein Füllkopf (10, 100, 200, 300, 506) nach einem der vorhergehenden Ansprüche angeordnet ist.

5. Prozessvorrichtung nach Anspruch 4, **dadurch gekennzeichnet, dass** der Werkstückträger (502) und der Deckel (504) fluiddicht miteinander verbunden oder verbindbar sind.

6. Prozessvorrichtung nach Anspruch 4 oder 5, **dadurch gekennzeichnet, dass** an dem Deckel (504) und/oder dem Werkstückträger (502) zumindest ein Prozessanschluss (508, 510) vorgesehen ist, der mit dem Druckanschluss (22) der Befüllkammer (14) des zumindest einen Füllkopfs (10, 100, 200, 300, 506) verbunden ist.

7. Prozessvorrichtung nach einem der Ansprüche 4 bis 6, **dadurch gekennzeichnet, dass** an dem Werkstückträger (502) ein Prozessanschluss (512) zur Evakuierung des Innenraums der Prozessvorrichtung (500) vorgesehen ist.

8. Prozessvorrichtung nach einem der Ansprüche 4 bis 7, **dadurch gekennzeichnet, dass** der Werkstückträger (502) eine federnd gelagerte Aufnahme zur Aufnahme der zumindest einen elektrochemischen Zelle (26, 26a, 26b) aufweist.

9. Elektrolyt-Befüllanordnung (600) mit zumindest einer Befüllstation (608) zur Befüllung der Vorkammern (12) von an einem Deckel (504) einer Prozessvorrichtung (500, 550) nach einem der Ansprüche 4 bis 8, angeordneten Füllköpfen (10, 100, 200, 300, 506), mehreren von der zumindest einen Befüllstation (608) getrennten Prozessstationen (612), wobei jede Prozessstation (612) zumindest einen Anschluss zur Verbindung mit einem Prozessanschluss (508, 510, 512) einer Prozessvorrichtung (500, 550) aufweist.

10. Elektrolyt-Befüllanordnung nach Anspruch 9, **dadurch gekennzeichnet, dass** beladeseitig und/oder entladeseitig eine Wiegestation (606, 616) vorgesehen ist.

11. Elektrolyt-Befüllanordnung nach Anspruch 9 oder 10, **dadurch gekennzeichnet, dass** eine Transportvorrichtung (610) zum Transport von Prozessvorrichtungen (500, 550) und eine Transportvorrichtung (620) zum Transport von Deckeln (504) von Prozessvorrichtungen (500, 550) vorgesehen sind.

12. Verfahren zum Befüllen einer Elektrochemische Zelle (26, 26a, 26b) mit einem Elektrolyt mit einem Füllkopf (10, 100, 200, 300, 506) nach einem der Ansprüche 1 bis 3, mit den Verfahrensschritten:
a. Befüllen der Vorkammer (12) des Füllkopfs (10, 100, 200, 300, 506) mit einem Elektrolyten, wobei das Absperrorgan (18) in einer Schließstellung ist, anschließend
b. Aufsetzen des Füllkopfs (10, 100, 200, 300, 506) auf eine zu befüllende elektrochemische Zelle (26, 26a, 26b),
c. Evakuieren der Befüllkammer (14) und der elektrochemischen Zelle (26, 26a, 26b),
d. Verlagern des Absperrorgans (18) in die Öffnungsstellung, sodass Elektrolyt von der Vorkammer (12) in die Befüllkammer (14) und die elektrochemische Zelle (26, 26a, 26b) fließt,
e. Verlagern des Absperrorgans (18) in die Schließstellung.

13. Verfahren nach Anspruch 12, **dadurch gekennzeichnet, dass** nach dem Schließen des Absperrorgans (18) ein Druck größer 1 bar an den Druckanschluss (22) angelegt wird.

14. Verfahren nach Anspruch 12 oder 13, **dadurch gekennzeichnet, dass** das Absperrorgan (18) erneut in eine Öffnungsstellung verbracht wird.

15. Verfahren nach einem der Ansprüche 12 bis 14, **dadurch gekennzeichnet, dass** mehrere Druckzyklen, optional bei geöffnetem Absperrorgan (18), durchgeführt werden.

16. Verfahren nach einem der Ansprüche 12 bis 15, **dadurch gekennzeichnet, dass** die Vorkammer (12) des Füllkopfs (10, 100, 200, 300, 506) in einer Befüllstation (608) einer Elektrolyt-Befüllanordnung (600) mit Elektrolyt befüllt wird und die elektrochemische Zelle (26, 26a, 26b) in einer Prozessstation (612) der Elektrolyt-Befüllstation (600) mit Elektrolyt aus dem Füllkopf (10, 100, 200, 300, 506) befüllt wird.
